# EUROPEAN PATENT APPLICATION

(11) **EP 4 647 819 A1**
(43) Date of publication of application: **12.11.2025**
(21) Application number: 24174713.8
(22) Date of filing: 08.05.2024
(51) Int. Cl.: G02B 6/293

(54) **INTEGRATED OPTICAL OPEN RING-RESONATORS WITH ADJUSTABLE COUPLING**

(71) Applicant: Ephos S.r.l., 20123 Milano (MI) (IT)
(72) Inventor: Osellame, Roberto, 20123 Milano (MI) (IT); Liscidini, Marco, 27100 Pavia (PV) (IT)
(74) Representative: Pace Napoleone, Maria

(57) **Abstract**

Optical resonator (1) having a dielectric optical waveguide (2) comprising a guide input (3) for receiving light, a guide output (4) for outputting light, and a folded guide portion (5) positioned between the guide input (3) and the guide output (4) for transmitting light from the input (3) to the output (4), wherein the optical waveguide (2) is folded to form an optical ring resonator,
wherein the optical waveguide (2) is a single continuous waveguide comprising a crossing point (6), said crossing point (6) being a point of the waveguide (2) where a first portion (7) of the waveguide (2) passes below or above a second portion (8) of the waveguide (2).

## Description

### Technical field

The present invention relates to an optical resonator and to a device comprising said optical resonator. Also, the present invention relates to a method for manufacturing the optical resonator.

### Background

Optical resonators are key elements in many photonic applications, for example in the development of lasers, for spectrally-resolved sensing and also for communications. In particular, optical ring resonators are devices used in optics and photonics exploiting the resonant behavior of light waves circulating within a closed loop, typically a ringshaped waveguide.

The manufacturing of optical resonators can involve different types of technologies. Photolithography is the most common technique used for patterning the ring structure on a substrate. However, laser micromachining can also be used for precision cutting, drilling, ablation of materials, which is useful for refining the shape and dimensions of the ring resonators.

It is noted that in the design and manufacturing of optical resonators, achieving high quality factors (i.e., long storage times of electromagnetic radiation within the resonator) is critical. To this end, it is necessary to minimize all factors that could cause losses of electromagnetic radiation, for example surface roughness or sharp discontinuity of the refractive index. In this respect, today, ring resonators are the most utilized integrated optical resonators. As mentioned, they are constituted of a waveguide that is bent on itself to create a closed-loop circuit. If the cross section of the waveguide is kept constant, it is possible, in principle, to realize a circuit without significant refractive index discontinuities along the path. Yet, the fabrication of high-quality ring resonators can be challenging for some technological platforms. For instance, ultra-short pulsed lasers present challenges associated with the precision required to create the closure point in a ring-like circuit. In fact, either the two ends do not overlap, and then a gap remains in the ring, or, if they overlap, the twofold irradiation causes an increased index change with respect to the rest of the ring. This limits the quality factor for the ring resonator due to the presence of scattering at the closure point.

Another important aspect in the use of ring resonators is the ability to control the storage time of radiation inside the resonator. In this case, it is typically possible to rely on the control of the coupling between the resonator and the bus waveguide. Usually, this coupling is achieved in an evanescent manner and can be dynamically controlled through heating of the guides near the coupling point or by implementing interferometric couplers. Currently known solutions for ring resonators consider the case of a resonator consisting of a closed circuit. Again, for some technological platforms this can be a problem.

### Summary

Examples of the present disclosure seek to address or at least alleviate the above problems.

In a first aspect, there is provided an optical resonator having a dielectric optical waveguide comprising:
a guide input for receiving light;
a guide output for outputting light; and
a folded guide portion positioned between the guide input and the guide output for transmitting light from the input to the output, wherein the optical waveguide is folded to form an optical ring resonator, wherein the optical waveguide is a single continuous waveguide comprising a crossing point, said crossing point being a point of the waveguide where a first portion of the waveguide passes below or above a second portion of the waveguide.

According to this configuration, the folded portion of the waveguide representing the ring resonator is not formed by a closed loop within the guide. Rather, the folded portion is represented by an open resonator design consisting of a single waveguide folded back on itself but without intersections or closures. In other words, differently from the ring resonators known in the art, which are two-dimensional structures extending on one single plane, the present optical resonator is a three-dimensional structure, wherein the first portion of the folded waveguide does not pass through the second portion to close the loop, rather it passes above or below said second portion. This configuration eliminates the requirement to create a closed loop within the guide, thus solving the issues of possible radiation leaking that can arise from waveguide inhomogeneities at the closing point, a problem that one may encounter in closed resonators produced through certain fabrication techniques (such as femtosecond laser writing).

In a second aspect, there is provided an optical device comprising at least an optical resonator according to the first aspect.

In a third aspect, there is provided a method for manufacturing an optical resonator according to the first aspect.

Other aspects and features are defined in the appended claims.

Examples of the disclosure may provide an optical resonator that is efficient and simple to realize. In particular, examples of the disclosure may provide an optical resonator that can be manufactured with a single waveguide without the need to close the circuit upon itself, thereby avoiding scattering losses that would occur when using particular fabrication techniques for realizing ring resonators. Also, examples of the disclosure may provide an optical resonator with the ability of dynamically controlling (after manufacturing) the storage time of radiation within the resonator.

### Brief Description of the Drawings

Examples of the disclosure will now be described by way of example only with reference to the accompanying drawings, in which like references refer to like parts, and in which:
Figure 1A is a schematic representation of the optical resonator according to an example;
Figure 1 B is a detail of the crossing point of the optical resonator according to an example;
Figure 2 is a schematic representation of the optical resonator including two sequential couplers and a phase shifter according to an example;
Figure 3A is a schematic representation of the optical resonator including a 2x2 shifter according to an example;
Figure 3B is a schematic representation of the optical resonator including an additional crossing point according to an example; and
Figure 3C is a schematic representation of the optical resonator including an additional waveguide according to an example.

### Detailed Description

An optical resonator, an optical device and a method for manufacturing the optical resonator are disclosed. In the following description, a number of specific details are presented in order to provide a thorough understanding of the examples of the disclosure. It will be apparent however to a person skilled in the art that these specific details need not be employed in order to practice the examples of the disclosure. Conversely, specific details known to the person skilled in the art are omitted for the purposes of clarity in presenting the examples.

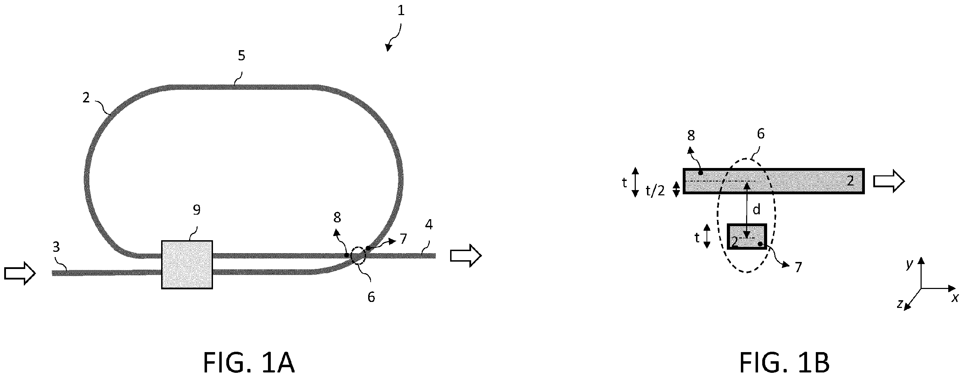

Figure 1A schematically illustrates an optical resonator 1 according to one example of the present disclosure. The optical resonator 1 has a dielectric optical waveguide 2 with a guide input 3, a guide output 4 and a folded portion 5 positioned between the guide input 3 and the guide output 4. Light is received at the input 3 (arrow on the left side of the figure) is transmitted through the folded portion 5 and is output at the guide output 4 (arrow on the right side of the figure). The folded portion 5 forms an optical ring resonator. It is noted that the optical waveguide 2 is a single continuous waveguide meaning that no connection points are present between the folded portion 5 and both the guide input 3 and the guide output 4. Also, the optical waveguide 2 comprises a crossing point 6, wherein a first portion 7 of the waveguide 2 passes above or below a second portion 8 of said waveguide 2. In other words, the waveguide 2 is folded to form a loop. However, at the crossing point 6 the two portions 7, 8 of the waveguide 2 do not cross through each other, so that the loop is not extended on a single plane to define a two-dimensional structure. Rather, the loop defines a three-dimensional structure. In other words, the optical waveguide 2, extending from a first end to a second end, defines a loop, wherein however the first end do not coincide with the second end. Rather, one of the first or second end is placed on (or over) the other end, and this occurs at the above-mentioned crossing point 6. The three-dimensional structure can be for example a three-dimensional helix with at least one loop.

This configuration is better illustrated in figure 1B schematically showing a partial cross section of the optical resonator 1 at the crossing point 6. According to the reference coordinate system of the figure, one portion of the waveguide 2, for example the second portion 8, extends longitudinally along one direction, for example the x direction. Here, the light travels along the longitudinal direction and exits for example on the right side of the portion illustrated in the figure, at the guide output 4. The other portion, on the other hand, i.e. the first portion 7, extends transversely along the direction of the second portion 8, for example along the z direction.

Specifically, the first portion 7 of the waveguide 2 passes below the second portion 8 of the waveguide 2 at a crossing distance d. The crossing distance d extends along the y direction. The crossing distance d is defined as the distance between the two portions 7, 8 at the crossing point 6. As shown in figure 1B, d is the distance between the waveguide's center of the second portion 8 and the waveguide's center of the first portion 7. Specifically, the waveguide 2 has a thickness t and the waveguide's center of the first and second portions 7, 8 lies halfway across the thickness of the waveguide 2 (t/2) from the external surface of said portions 7, 8. It is noted that figure 1B shows a configuration, wherein the crossing distance d is greater than zero and is greater than the waveguide's thickness t so that the two portions 7, 8 of the waveguide 2 do not touch each other at the crossing point 6. However, the crossing distance d can also be equal to the thickness t of the waveguide 2 so that the two portions 7, 8 of the waveguide 2 touch each other at the crossing point 6, i.e. the upper surface of the first portion 7 of the waveguide 2 touches the lower surface of the second portion 8 of the waveguide 2. What is important is that the crossing distance d is greater than zero (d > 0), but not equal to zero. A zero crossing distance d would mean a perfect intersection between the first portion 7 and the second portion 8 of the waveguide 2. In this case, the loop formed by the folded portion 5 would define a two-dimensional structure, thereby leading to a waveguide inhomogeneity at this crossing point 6. When the crossing distance d is greater than zero but lower that the waveguide's thickness t, there is not a perfect intersection and the first and second portions 7, 8 partly cross through each other. In this case, only a part of the path along the first portion 7 would pass through the path along the second portion 8, and the loop formed by the folded portion 5 would define a three-dimensional structure. In other words, to reduce waveguide's inhomogeneity at this crossing point 6, the crossing distance d needs to be greater than zero (d>0). In one example, to further reduce waveguide's inhomogeneity at this crossing point 6, the crossing distance d can be greater than waveguide's thickness t (d>t). Figures 1B shows a configuration, wherein the second portion 8 lies over, or on, the first portion 7. However, the same considerations also apply in case the first portion 7 would lie over, or on, the second portion 8.

It is noted that the crossing distance d can assume any possible value (with the condition that d > 0) provided that a negligible evanescent coupling is present between the first portion 7 and the second portion 8 With "negligible evanescent coupling" is intended here that there is no (or almost no) coupling between the electromagnetic waves or fields extending into the first portion 7 and the electromagnetic waves or fields extending into the second portion 8 at the crossing point 6. In reality, a minimum evanescent coupling can be present. Based on the light wavelength, the material used for the waveguide and/or the dimensions of the waveguide, the crossing distance d can be selected such that the coupling rate between the electromagnetic waves or fields extending into the first portion 7 and the electromagnetic waves or fields extending into the second portion 8 at the crossing point 6 is lower than the decay rate of the optical resonator 1, i.e. lower than the rate at which the energy within the resonator 1 decreases due to any other loss mechanism.

In one example, the optical waveguide 2 can be produced using a laser. Advantageously, the laser is an ultra-short pulse laser, such as for example a femtosecond laser or a picosecond laser. These lasers are particularly suitable for manufacturing ring resonators since they allow a minimization of the heat transfer to the surrounding material, resulting in high precision and minimal thermal damage. The particular three-dimensional configuration of the optical resonator 1 as described in the present disclosure allows the use of these lasers without the risk of radiation leaking arising from waveguide inhomogeneities at the closing point.

Other types of processing technologies can be used for manufacturing the waveguide 2, provided that it is possible to realize the three-dimensional optical ring resonator structure as mentioned above.

In examples, the optical resonator 1 is made of passive or active materials, or of nonlinear materials. This includes doped or undoped glasses, second and third-order nonlinear crystals or semiconductors.

As shown in figure 1A, the optical resonator 1 further comprises a coupler system 9 for coupling light received at the guide input 3 with light travelling in the folded guide portion 5. For example, the coupler system 9 can be a directional coupler. The coupler system 9 can be an input coupler to introduce light into the ring. The coupling can be achieved through evanescent coupling between the folded portion 5 (the ring) and a nearby waveguide, at the guide input 3.

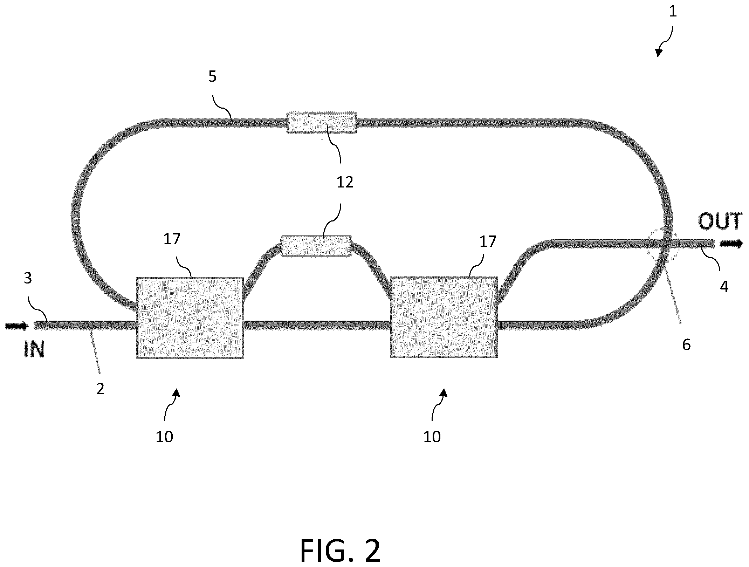

In one example, the coupler system 9 comprises two sequential couplers 10 forming a Mach-Zehnder interferometer (MZI). This is shown in figure 2. In particular, the two sequential couplers 10 can be located at two coupling regions 17 along the optical waveguide 2 to couple a portion of the waveguide 2 at the input 3 with a portion of waveguide 2 in the folded portion 5. The optical resonator 1 can comprise a phase shifter 12, in particular a thermo-optic element or an electro-optic element (or the like). The phase shifter 12 can be used to tune the Mach-Zehnder interferometer. By means of a tunable Mach-Zehnder interferometer, it is possible to control the dwelling time of the radiation. Specifically, the phase shifter 12 can be used to control the transmission of the interferometer and thus the decay rate of resonator 1.

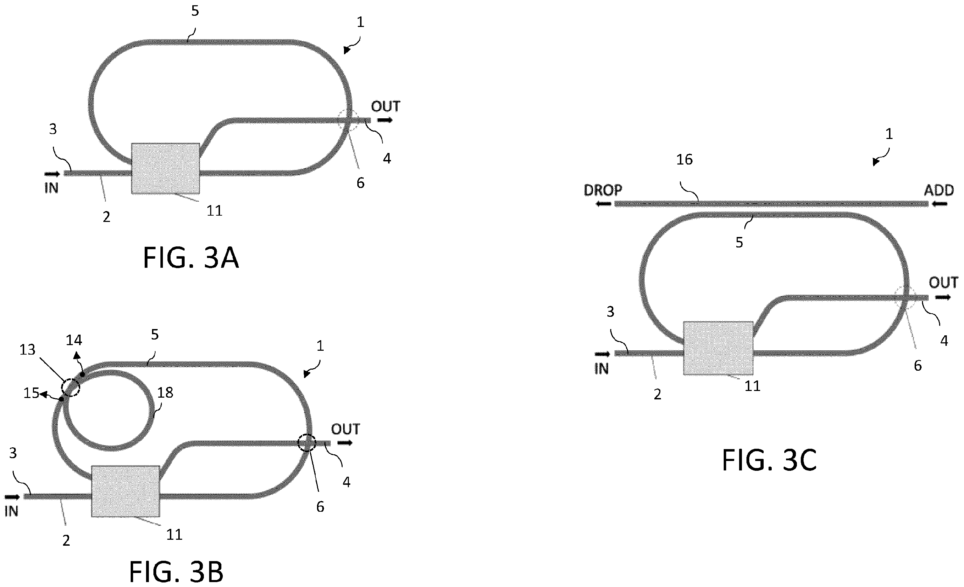

With reference to figure 3A, the coupler system 9 can comprise a 2X2 coupler 11. In particular, 2x2 couplers 11 can be used which are designed to have a very large cross coupling coefficient. The larger is the cross-coupling coefficient, the larger is the field enhancement that can be obtained in the ring (limited only by intrinsic propagation losses).

The optical resonator 1 can also be constructed by bending the waveguide 2 on multiple planes and then implementing the interferometric coupling, as shown in figure 3B. In examples, the optical resonator 1 further comprises at least one additional crossing point 13, said additional crossing point 13 being a point of the waveguide 2 where a third portion 14 of the waveguide 2 passes below or above a fourth portion 15 of the waveguide 2, wherein a negligible evanescent coupling is present between the third portion 14 and the fourth portion 15 such that a coupling rate at the additional crossing point 13 is lower than the rate at which the energy in the optical resonator 1 decays. In particular, the additional crossing point 13 is located in the folded portion 5 of the optical waveguide 2. In other words, the optical resonator 1 comprises an additional folded portion 18. According to figure 3B, the additional folded portion 18 is located within the folded portion 5. Of course, the optical resonator 1 can comprise more than one additional crossing points 13 and more than one additional folded portions 18 that can be located in different regions along the waveguide 2. This would allow one to increase the ring resonator length by keeping the same device footprint.

As shown in figure 3C, the optical resonator 1 can also be realized in a so-called add-drop configuration, incorporating a second guide with evanescent coupling. In particular, the optical resonator 1 further comprises at least one additional waveguide 16 at the folded portion 5 to provide an evanescent coupling with the light travelling in the folded portion 5. This would allow to optimize separately the injection and the extraction of light from the ring resonator, for example in signal filtering or routing.

The optical resonator 1 as described in the present disclosure can be used in a wide range of applications. For example, such optical resonator 1 can be used in communication systems for efficient data transmission or as filters, modulators, and switches for signal processing in integrated photonics. Also, the optical resonator 1 can be used in biosensing or in nonlinear optics to enhance nonlinear effects. The optical resonator 1 can be used in many other applications, such as quantum information processing, laser development, photonic computing, and even in chemical analysis, medical diagnostics and environmental monitoring as part of a lab-on-chip device.

Accordingly, dedicated optical devices can be realized comprising at least one optical resonator 1 for different purposes.

As mentioned above, the optical ring resonator 1 according to the present disclosure can advantageously be manufactured using a laser, in particular an ultra-short pulse laser. The optical waveguide 2 can be formed by writing in a glass substrate to create a three-dimensional structure as described above, i.e. having an open ring resonator design consisting of a single waveguide 2 folded back on itself but without intersections or closures. In fact, the use of ultra-short pulses induces a nonlinear absorption mechanism in transparent materials that is highly localized in the laser focus, where the intensity is higher. This results in an effective method to permanently modify the material in the bulk without affecting the surroundings. When the irradiation parameters are properly tuned, the laser-material interaction results in a permanent refractive index increase. Translation of the sample with respect to the laser beam produces optical waveguides. The translation can be made in all directions, thus allowing 3D circuit layouts.

Although a variety of techniques and examples of such techniques have been described herein, these are provided by way of example only and many variations and modifications on such examples will be apparent to the skilled person and fall within the spirit and scope of the present invention, which is defined by the appended claims and their equivalents.

### Reference signs

- 1.: Optical resonator
- 2.: Optical waveguide
- 3.: Guide input
- 4.: Guide output
- 5.: Folded portion
- 6.: Crossing point
- 7.: First portion
- 8.: Second portion
- 9.: Coupler system
- 10.: Sequential couplers
- 11.: 2x2 coupler
- 12.: Phase shifter
- 13.: Additional crossing point
- 14.: Third portion
- 15.: Fourth portion
- 16.: Additional waveguide
- 17.: Coupling regions
- 18.: Additional folded portion

## Claims

1. Optical resonator (1) having a dielectric optical waveguide (2) comprising:
a guide input (3) for receiving light;
a guide output (4) for outputting light; and
a folded guide portion (5) positioned between the guide input (3) and the guide output (4) for transmitting light from the input (3) to the output (4), wherein the optical waveguide (2) is folded to form an optical ring resonator,
wherein the optical waveguide (2) is a single continuous waveguide comprising a crossing point (6), said crossing point (6) being a point of the waveguide (2) where a first portion (7) of the waveguide (2) passes below or above a second portion (8) of the waveguide (2).

2. Optical resonator (1) according to claim 1, wherein a negligible evanescent coupling is present between the first portion (7) and the second portion (8) such that a coupling rate at the crossing point (6) is lower than the rate at which the energy in the optical resonator (1) decays due to any other loss mechanisms.

3. Optical resonator (1) according to any one of claims 1 to 2, further comprising a coupler system (9) for coupling light received at the guide input (3) with light travelling in the folded guide portion (5).

4. Optical resonator (1) according to claim 3, wherein the coupler system (9) comprises two sequential couplers (10) forming a Mach-Zehnder interferometer.

5. Optical resonator (1) according to claim 4, wherein the two sequential couplers (10) are located at two coupling regions (17) along the optical waveguide (2) to couple a portion of the waveguide (2) at the input (3) with a portion of waveguide (2) in the folded portion (5).

6. Optical resonator (1) according to claim 3, wherein the coupler system (9) comprises a 2X2 coupler (11).

7. Optical resonator (1) according to any one of claims 1 to 6, further comprising a phase shifter (12), in particular a thermo-optic element or an electro-optic element.

8. Optical resonator (1) according to any one of claims 1 to 7, further comprising at least one additional crossing point (13) said additional crossing point (13) being a point of the waveguide (2) where a third portion (14) of the waveguide (2) passes below or above a fourth portion (15) of the waveguide (2), wherein a negligible evanescent coupling is present between the third portion (14) and the fourth portion (15) such that a coupling rate at the additional crossing point (13) is lower than the rate at which the energy in the optical resonator (1) decays due to any other loss mechanism.

9. Optical resonator (1) according to claim 8, wherein the additional crossing point (13) is located in the folded portion (5) of the optical waveguide (2).

10. Optical resonator (1) according to any one of claims 1 to 9, wherein the optical waveguide (2) is produced using a laser, in particular a femtosecond laser.

11. Optical resonator (1) according to any one of claims 1 to 10, further comprising at least one additional waveguide (16) at the folded portion (5) to provide an evanescent coupling with the light travelling in the folded portion (5).

12. Optical resonator (1) according to any one of claims 1 to 11, wherein the optical resonator (1) is made of passive or active materials, or of nonlinear materials including doped or undoped glasses, second and third-order nonlinear crystals or semiconductors.

13. Optical resonator (1) according to any one of claims 1 to 12, wherein, the first portion (7) of the waveguide (2) passes below or above the second portion (8) of the waveguide (2) at a crossing distance (d), the crossing distance (d) being the distance between the waveguide's center of the second portion (8) and the waveguide's center of the first portion (7), wherein the crossing distance (d) is greater than zero.

14. Optical device comprising at least an optical resonator (1) according to any one of claims 1 to 13.

15. Method for manufacturing the optical resonator (1) according to any one of claims 1 to 13, comprising using a laser, in particular a femtosecond laser, for writing the optical waveguide (2) in a substrate, in particular in glass.
